# EUROPEAN PATENT SPECIFICATION

(11) **EP 4 211 850 B1**
(45) Date of publication and mention of the grant of the patent: **28.10.2026**
(21) Application number: 21769814.1
(22) Date of filing: 08.09.2021
(51) Int. Cl.: H04L 5/00, H04L 1/18

(54) **TRANSMITTING A PRIORITIZED TRANSPORT BLOCK**
ÜBERTRAGUNG EINES PRIORISIERTEN TRANSPORTBLOCKS
TRANSMISSION D'UN BLOC DE TRANSPORT PRIORITAIRE

(30) Priority: 08.09.2020 US 202063075733 P
(43) Date of publication of application: 19.07.2023
(60) Divisional application: 26195517.3 / 4 808 028
(73) Proprietor: Lenovo (Singapore) Pte. Ltd., Singapore 556741 (SG)
(72) Inventor: LOEHR, Joachim, 65203 Wiesbaden (DE); GOLITSCHEK EDLER VON ELBWART, Alexander Johann Maria, 64285 Darmstadt (DE)
(74) Representative: Openshaw & Co.
(86) International application number: PCT/IB2021/058170
(87) International publication number: WO 2022/053949

(56) References cited:
- SAMSUNG: "Prioritization between initial TX and re-TX on CG in NR-U", vol. RAN WG2, no. Online Meeting ;20200420 - 20200430, 9 April 2020 (2020-04-09), XP051870098, Retrieved from the Internet <URL:https://ftp.3gpp.org/tsg_ran/WG2_RL2/TSGR2_109bis-e/Docs/R2-2002614.zip R2-2002614.docx> [retrieved on 20200409]
- VIVO: "Harmonizing CG enhancements in NR-U and URLLC/IIoT", vol. RAN WG2, no. electronic; 20200817 - 20200828, 7 August 2020 (2020-08-07), XP051911967, Retrieved from the Internet <URL:https://ftp.3gpp.org/tsg_ran/WG2_RL2/TSGR2_111-e/Docs/R2-2007146.zip R2-2007146_Harmonizing CG enhancements in NR-U and URLLC_IIoT.doc> [retrieved on 20200807]
- "3rd Generation Partnership Project; Technical Specification Group Radio Access Network; NR; Medium Access Control (MAC) protocol specification (Release 16)", vol. RAN WG2, no. V16.1.0, 24 July 2020 (2020-07-24), pages 1 - 151, XP051925832, Retrieved from the Internet <URL:ftp://ftp.3gpp.org/Specs/archive/38_series/38.321/38321-g10.zip 38321-g10.docx> [retrieved on 20200724]

## Description

### CROSS-REFERENCE TO RELATED APPLICATIONS

This application claims priority to United States Patent Application Serial Number 63/075,733 entitled "APPARATUSES, METHODS, AND SYSTEMS FOR RECOVERY MECHANISMS FOR URLLC TRAFFIC OPERATED IN A SHARED OR UNLICENSED SPECTRUM" and filed on September 8, 2020 for Joachim Loehr.

### FIELD

The subject matter disclosed herein relates generally to wireless communications and more particularly relates to transmitting a prioritized transport block. There is described herein a method performed by a user equipment, a user equipment, and a processor for wireless communication.

### BACKGROUND

In certain wireless communications networks, certain communications may have a higher urgency than other communications. In such networks, communications with higher urgency may not be prioritized over other communications.

R2-2002614 is a 3GPP change request titled "Prioritization between initial TX and re-TX on CG in NR-U" submitted by Samsung at TSG-RAN WG2 e-Meeting #109-e-Bis on 20 April 2020, and describes a proposed change to 3GPP technical specification 38.321 v16.0.0.

R2-2007146 is a 3GPP discussion document titled "Harmonizing CG enhancements in NR-U and URLLC/IIoT" submitted by vivo at TSG RAN WG2#111 e-Meeting, on 17 August 2020.

### BRIEF SUMMARY

The invention is defined by the appended claims. Claim 1 defines a method performed by a user equipment, claim 8 defines a user equipment, and claim 14 defines a processor for wireless communication. In the following, any method and/or apparatus referred to as embodiments but nevertheless do not fall within the scope of the appended claims are to be understood as examples helpful in understanding the invention.

Methods for transmitting a prioritized transport block are disclosed. Apparatuses and systems also perform the functions of the methods. One embodiment of a method includes determining, at a user equipment, a first priority corresponding to a first transport block associated with a first hybrid automatic repeat request process pending for retransmission on a configured uplink grant resource. In some embodiments, the method includes determining a second priority corresponding to an initial transmission on the configured uplink grant resource of a second transport block associated with a second hybrid automatic repeat request process. In certain embodiments, the method includes selecting the second hybrid automatic repeat request process and transmitting the initial transmission of the second transport block on the configured uplink grant resource before retransmitting the first transport block.

One apparatus for transmitting a prioritized transport block includes a user equipment. In some embodiments, the apparatus includes a transmitter. In various embodiments, the apparatus includes a processor that: determines a first priority corresponding to a first transport block associated with a first hybrid automatic repeat request process pending for retransmission on a configured uplink grant resource; determines a second priority corresponding to an initial transmission on the configured uplink grant resource of a second transport block associated with a second hybrid automatic repeat request process; and selects the second hybrid automatic repeat request process. The transmitter transmits the initial transmission of the second transport block on the configured uplink grant resource before retransmitting the first transport block.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for transmitting a prioritized transport block;
Figure 2 is a schematic block diagram illustrating one embodiment of an apparatus that may be used for transmitting a prioritized transport block;
Figure 3 is a schematic block diagram illustrating one embodiment of an apparatus that may be used for transmitting a prioritized transport block;
Figure 4 is a timing diagram illustrating one embodiment of a failed configured uplink grant;
Figure 5 is a flow chart diagram illustrating one embodiment of a method for transmitting a prioritized transport block; and
Figure 6 is a flow chart diagram illustrating another embodiment of a method for transmitting a prioritized transport block.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

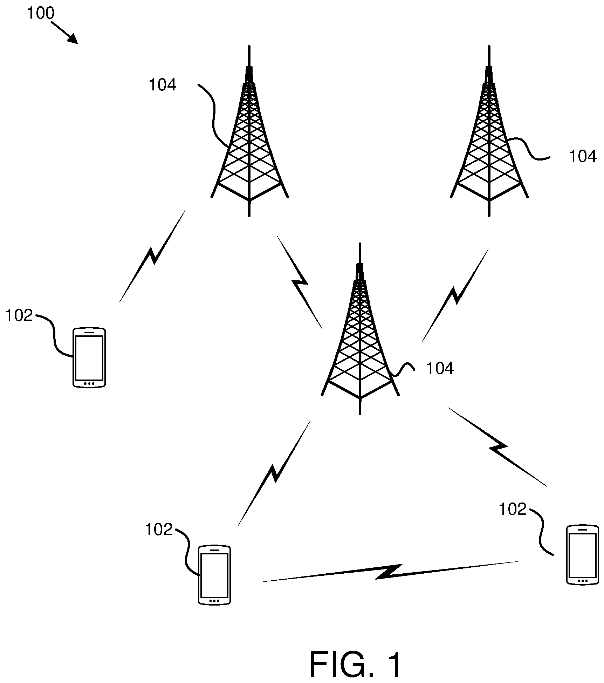

Figure 1 depicts an embodiment of a wireless communication system 100 for transmitting a prioritized transport block. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may determine, at a user equipment, a first priority corresponding to a first transport block associated with a first hybrid automatic repeat request process pending for retransmission on a configured uplink grant resource. In some embodiments, the remote unit 102 may determine a second priority corresponding to an initial transmission on the configured uplink grant resource of a second transport block associated with a second hybrid automatic repeat request process. In certain embodiments, the remote unit 102 may select the second hybrid automatic repeat request process and transmit the initial transmission of the second transport block on the configured uplink grant resource before retransmitting the first transport block. Accordingly, the remote unit 102 may be used for transmitting a prioritized transport block.

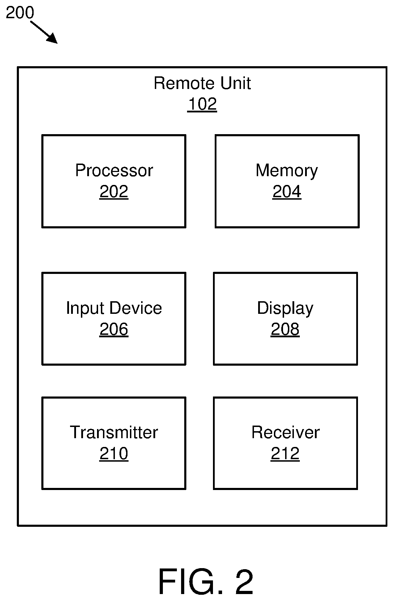

Figure 2 depicts one embodiment of an apparatus 200 that may be used for transmitting a prioritized transport block. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiments, the processor 202: determines a first priority corresponding to a first transport block associated with a first hybrid automatic repeat request process pending for retransmission on a configured uplink grant resource; determines a second priority corresponding to an initial transmission on the configured uplink grant resource of a second transport block associated with a second hybrid automatic repeat request process; and selects the second hybrid automatic repeat request process. The transmitter 210 transmits the initial transmission of the second transport block on the configured uplink grant resource before retransmitting the first transport block.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

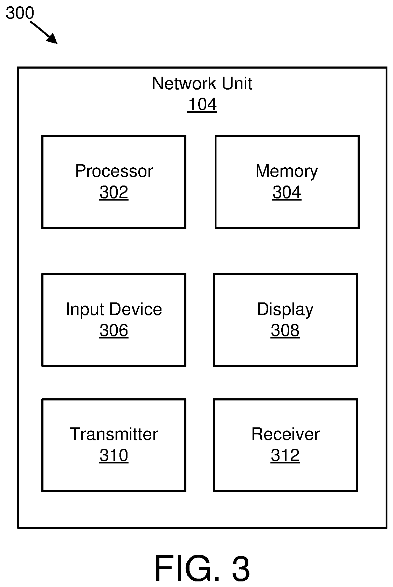

Figure 3 depicts one embodiment of an apparatus 300 that may be used for transmitting a prioritized transport block. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In certain embodiments, there may be enhanced industrial internet of things ("IoT") and ultra-reliable and low latency communication ("URLLC") support for new radio ("NR").

In some embodiments, achievable latency and reliability performance of NR may be used to support configurations with tight requirements. To extend NR applicability in various verticals, enhancements of radio access network ("RAN") features in different layers may be specified.

In various embodiments, support of unlicensed operation may enable operation on a frequency range 1 ("FR1") (e.g., in controlled environments). In such embodiments, the environment may contain only devices operating on the unlicensed band installed by a facility owner and where unexpected interference from other systems and/or radio access technology may only sporadically happen.

In certain embodiments, if a timer (e.g., cg-RetransmissonTimer) is not configured and a mobile communication system is operated in a shared spectrum access, even though there is a controlled environment, a listen-before-talk ("LBT") failure may occur. In such embodiments , there may be a risk that high priority data may be lost since an autonomous retransmission functionality may not be supported (e.g., auto-retransmission may be tied to a cg-RetransmissonTimer).

In some embodiments, if a timer (e.g., cg-RetransmissonTimer) and a logical channel based prioritization (e.g., lch-basedPrioritization) are configured concurrently, an UL grant may be deprioritized and a corresponding hybrid automatic repeat request ("HARQ") process may be pending. This may lead to a situation where two autonomous transmission (or retransmission) functionalities may be applied simultaneously by a user equipment ("UE") (e.g., autonomous retransmission according to a Rel-16 NR-U functionality/specification and autonomous transmission according to a Rel-16 IIoT/URLLC functionality/specification).

In various embodiments, multiple configured grants of a bandwidth part ("BWP") may be explicitly configured to share a common pool of HARQ processes. If HARQ processes are shared, the same configuredGrantTimer value may be configured for configured grant ("CG") configurations. However, in such embodiments, only the configuredGrantTimer value may be the same for the HARQ processes which are shared, whereas there is no requirement for the CG-RetransmissionTimer. Hence, it may be possible that different CG configurations may be configured with different CG-RetransmissionTimer values. In such configurations, a UE does not know which CG-RetransmissionTimer value should be used for a shared HARQ process.

In certain embodiments, a UE considers an uplink ("UL") grant (e.g., configured uplink grant) as de-prioritized if a corresponding uplink transmission (e.g., CG physical uplink shared channel ("PUSCH") transmission) cannot be performed due to an LBT failure. In such embodiments, if a cg-RetransmissonTimer is not configured when operating in a shared spectrum access, to cope with LBT failures which may still occur, an autonomous transmission functionality for industrial IoT ("IIoT") may be applied. In one implementation of such embodiments, a UE switches the priority status of an UL grant from prioritized to deprioritized upon receiving an LBT failure indication for the corresponding UL transmission from lower layers. In one example, the UE may have a prioritized UL grant (e.g., configured uplink grant that is a prioritized grant according to prioritization rules). In a shared spectrum, the UE needs to get access to a channel before being able to make an uplink transmission (e.g., the UE needs to perform channel sensing and/or an LBT operation before being allowed to make the uplink transmission corresponding to the prioritized UL grant). If a transmission of a prioritized UL grant cannot take place due to an unsuccessful clear channel assessment ("CCA") (e.g., LBT failure), a UE and/or a medium access control ("MAC") may change a priority status of the UL grant from prioritized to deprioritized. In some embodiments, a UE may autonomously transmit (or retransmit) data of a deprioritized UL grant in a subsequent CG grant associated with the same HARQ process.

In various embodiments, a UE starts a timer (e.g., ConfiguredGrantTimer) if LBT failure occurs for an uplink transmission (e.g., CG PUSCH transmission) and another timer (e.g., cg-RetransmissonTimer) is not configured.

In certain embodiments, if a timer (e.g., cg-RetransmissonTimer) and a logical channel based prioritization (e.g., lch-basedPrioritization) are configured concurrently for a UE and/or MAC, the UE performs an UL grant prioritization functionality. If there are colliding and/or overlapping uplink grants and/or transmissions (e.g., and for autonomous retransmissions) (e.g., retransmission triggered by LBT failure - if there is a retransmission opportunity, e.g., configured uplink grant - for an autonomous retransmission which collides with some other UL grant or UL transmission), the UE compares the priority of the two colliding UL transmissions and chooses the higher priority uplink transmission for further processing and/or transmission (e.g., prioritized UL grant). In some embodiments, a priority of an UL transmission and/or grant may be determined based on rules specified for IIoT. In various embodiments, a priority of an uplink grant may be determined by a highest priority among priorities of logical channels with data available that are multiplexed or may be multiplexed in a MAC protocol data unit ("PDU"), according to mapping restrictions. In certain embodiments, a priority of an uplink grant for which no data for logical channels is multiplexed or may be multiplexed in the MAC PDU may be lower than either the priority of an uplink grant for which data for any logical channels is multiplexed or may be multiplexed in the MAC PDU, or the priority of the logical channel triggering a scheduling request ("SR"). In some embodiments, if an overlapping uplink transmission has a higher priority than an autonomous retransmission, a UE may continue with the higher priority uplink transmission and postpone the autonomous retransmission until a later UL grant (e.g., a subsequent configured uplink grant). In various embodiments, a UE considers only a configured grant as available for an autonomous retransmission if there is no overlapping uplink transmission (e.g., on PUSCH) which has a higher priority.

In certain embodiments, a UE restarts a timer (e.g., CG-RetransmissionTimer) if retransmission could not be performed due to some higher priority uplink transmission. In some embodiments, a HARQ process is considered pending if a retransmission could not be performed due to some higher priority uplink transmission (e.g., retransmission is pre-empted by some higher priority new transmission).

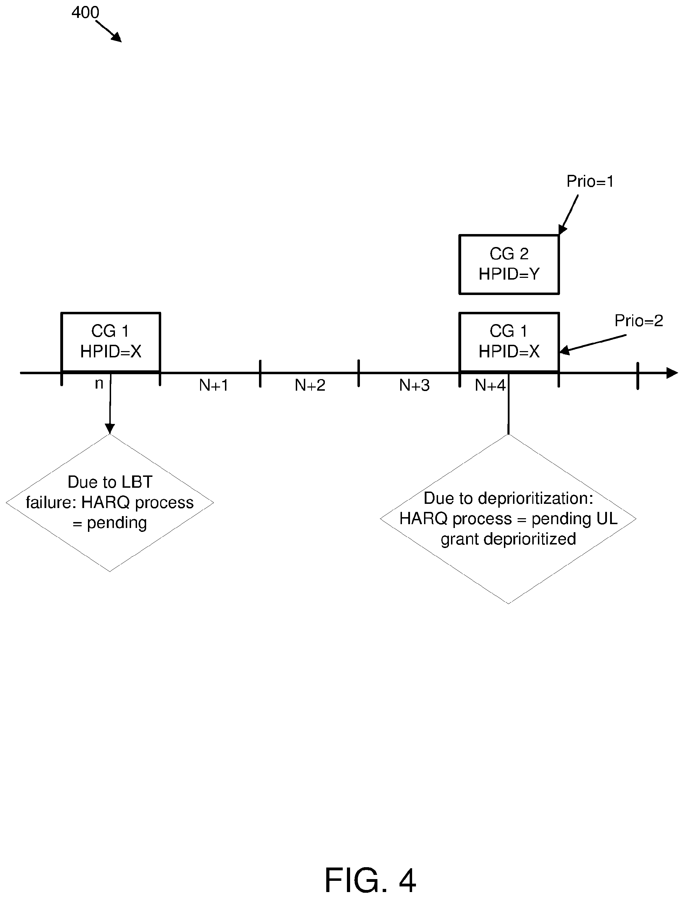

Figure 4 is a timing diagram 400 illustrating one embodiment of a failed configured uplink grant. A UE and/or MAC has a configured uplink grant (e.g., CG 1 having a HARQ process identifier ("HPID") of X) in slot n. Due to an LBT failure - as notified by a lower layer - the corresponding transmission cannot take place in slot n. Accordingly, the associated HARQ process is switched to respectively considered as pending (e.g., autonomous retransmission is triggered). Slot n+4 provides an earliest transmission opportunity (e.g., configured uplink grant) where the autonomous retransmission may take place. In various embodiments, the UE may perform the autonomous retransmission in slot n+4 regardless of the existence of any overlapping uplink transmission which may carry higher priority data. In certain embodiments, the UE compares the priority of overlapping configured grants (e.g., CG 2) in slot n+4 with the priority of the autonomous retransmission (e.g., CG 1, TB pending in the HARQ buffer). Since CG 2 has a higher priority in this example (e.g., priority of CG 1 being higher than priority of CG 2), then the autonomous retransmission (e.g., TB pending for autonomous retransmission on CG 1), the UE will transmit the prioritized grant (e.g., CG 2), and postpone the autonomous retransmission to a later subsequent uplink configured grant satisfying the criteria for an autonomous retransmission.

In some embodiments, an UL grant associated with a HARQ process that is pending (e.g., LBT failure occurred for the corresponding UL grant and/or transmission) may always be considered as a prioritized UL grant. In such embodiments, both cg-RetransmissonTimer and lch-basedPrioritization are configured for a UE and/or MAC. Since the priority status of the UL grant cannot be changed to "deprioritized" as long as the associated HARQ process is pending, the UE and/or the MAC will only perform autonomous retransmissions specified for NR-U and not perform autonomous transmissions specified for IIoT functionality. Even if an autonomous retransmission is deprioritized and/or preempted by a higher priority colliding uplink transmission and/or grant, the corresponding UL grant may not be considered as deprioritized but instead as prioritized.

In various embodiments, an UL grant associated with a HARQ process for which an LBT failure occurred for the corresponding uplink transmission may be considered as a deprioritized UL grant. The associated HARQ process may be considered as not pending. In such embodiments, both cg-RetransmissonTimer and lch-basedPrioritization are configured for a UE and/or a MAC. Since the priority status of the UL grant is changed to "deprioritized" if an LBT failure was indicated by lower layers and a corresponding uplink transmission couldn't be performed, the UE and/or the MAC may trigger an autonomous transmission of the deprioritized UL grant on a subsequent configured grant for the same HARQ process. Moreover, in such embodiments, the UE and/or the MAC may not perform an autonomous retransmission of a pending transport block ("TB") since the HARQ process is considered as not pending.

In certain embodiments, an UL grant that is preempted and/or deprioritized by a higher priority overlapping uplink grant and/or uplink transmission may be considered as prioritized and an associated HARQ process may be considered as pending. In such embodiments, both cg-RetransmissonTimer and lch-basedPrioritization are configured for a UE and/or a MAC. Since the HARQ process is considered as pending, the UE may perform an autonomous retransmission for the UL grant that was deprioritized on a subsequent uplink resource (e.g., configured uplink grant) qualifying for an autonomous retransmission. The autonomous retransmission functionality (e.g., NR-U) may be superior over an autonomous transmission functionality in terms of latency due to the fact that an autonomous retransmission can also take place on other configured grants as long as the transport block size matches. Hence, if latency is important, it may be beneficial to apply an autonomous retransmission (e.g., HARQ process is pending) even if an UL grant was deprioritized and/or preempted by another overlapping UL grant/transmission.

In some embodiments, an UL grant associated with a HARQ process which is pending (e.g., LBT failure occurred for a corresponding UL grant and/or transmission) may be considered as a prioritized UL grant if the priority of the UL grant is greater than or equal to a predefined threshold. The priority of an UL grant may be determined by the highest priority among priorities of logical channels with data available that are multiplexed or may be multiplexed in a MAC PDU, according to mapping restrictions. Since the priority status of the UL grant cannot be changed to "deprioritized" as long as the associated HARQ process is pending, the UE and/or the MAC may only perform autonomous retransmissions for NR-U and not perform autonomous transmissions for specified IIoT functionality. Even if an autonomous retransmission is deprioritized and/or preempted by a higher priority colliding uplink transmission and/or grant, the corresponding UL grant is not considered as deprioritized but as prioritized instead. Applying the autonomous retransmission procedure for high priority data may be beneficial since the autonomous retransmission functionality may have some advantages over the autonomous transmission functionality (e.g., IIoT) in terms of latency.

In various embodiments, an UL grant associated with a HARQ process for which an LBT failure occurred for a corresponding uplink transmission may be considered as a deprioritized UL grant if the priority of the UL grant is lower than a predefined priority threshold. The associated HARQ process may be considered as not pending. In such embodiments, both cg-RetransmissonTimer and lch-basedPrioritization may be configured for a UE and/or a MAC.

In certain embodiments, a network entity, such as a gNB, configures whether a configured grant configuration is configured with either autonomous transmissions (e.g., IIoT) or autonomous retransmissions (e.g., NR-U). For this embodiment, both cg-RetransmissonTimer and lch-basedPrioritization are configured for a UE and/or MAC. If the network entity has a configured grant configuration configured with autonomous retransmissions, the UE and/or the MAC may only perform autonomous retransmission if an uplink transmission cannot be performed due to either an LBT failure or deprioritization and/or preemption by a higher priority uplink grant and/or transmission. If the network entity has a configured grant configuration configured with autonomous transmissions, the UE and/or the MAC may only perform an autonomous transmission if LBT failure occurs for this CG or the configured grant was deprioritized and/or preempted by a higher priority uplink grant and/or transmission. In some embodiments, a new parameter is introduced in a ConfiguredGrantConfig IE (e.g., autonomousrecovery-r 17 - see Table 1) which indicates whether the autonomous transmission functionality (e.g., IIoT) or the autonomous retransmission functionality (e.g., NR-U) may be applied for the configured grant configuration.

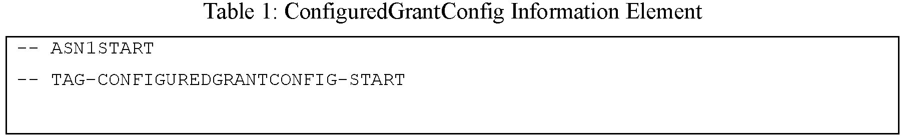

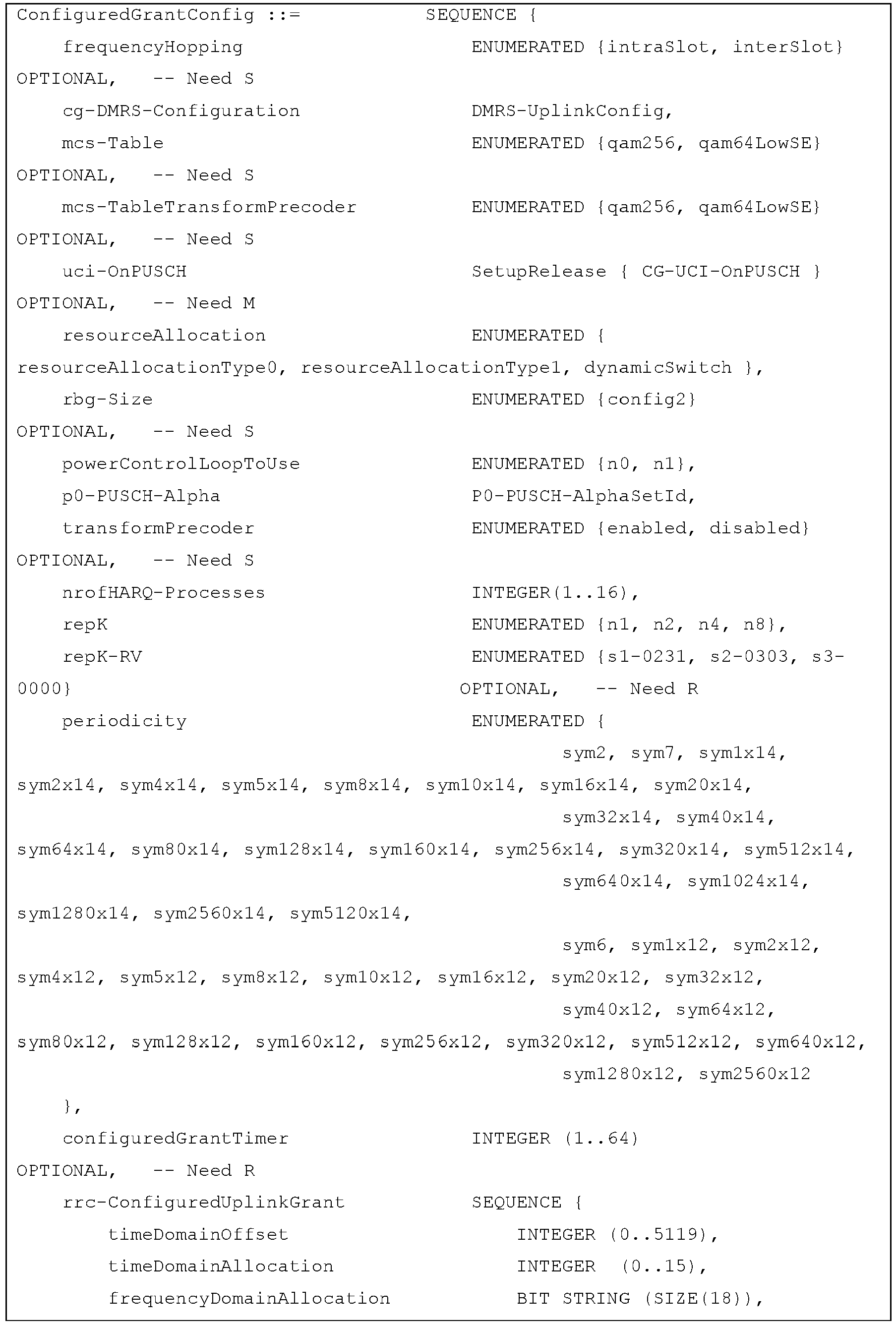

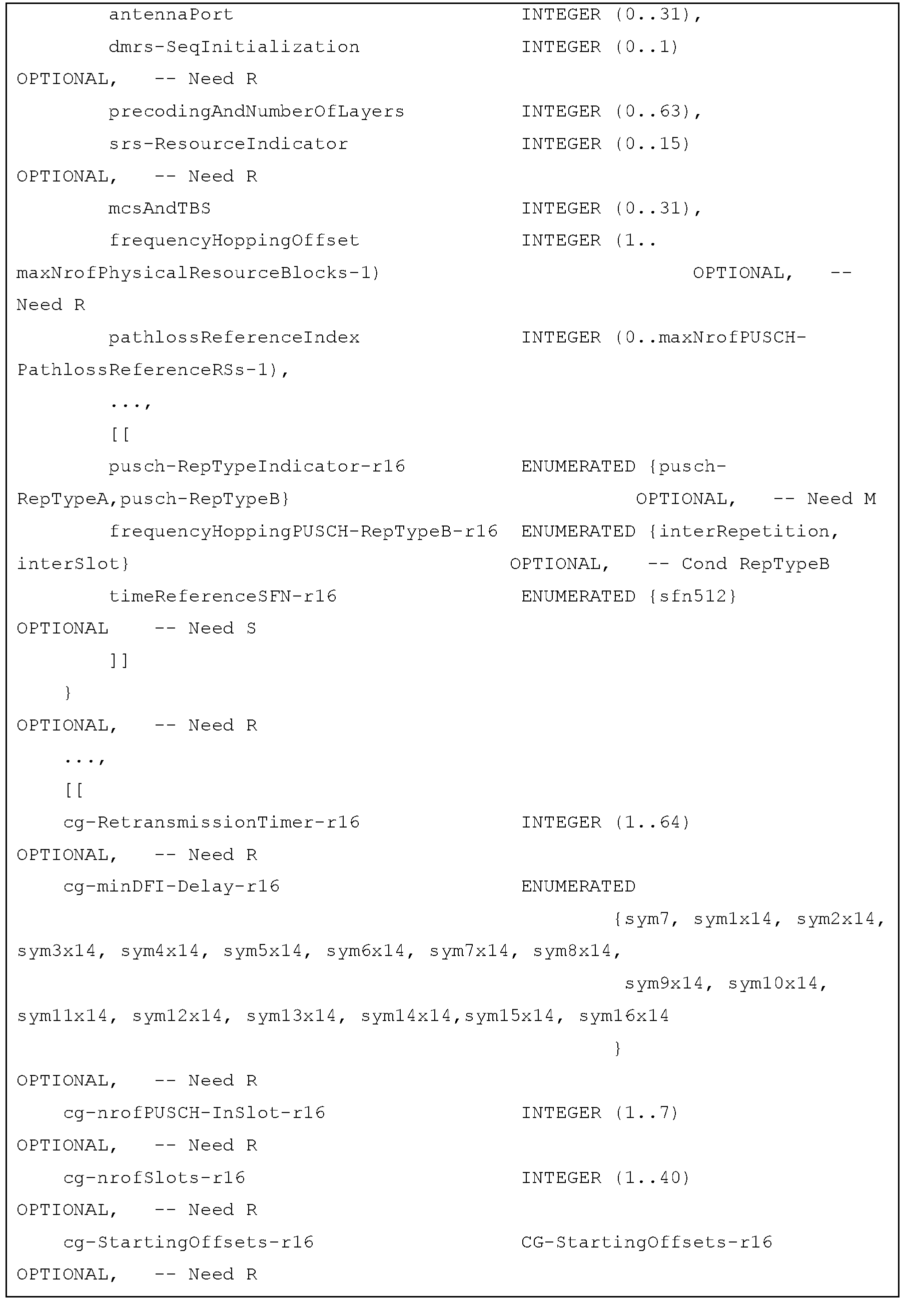

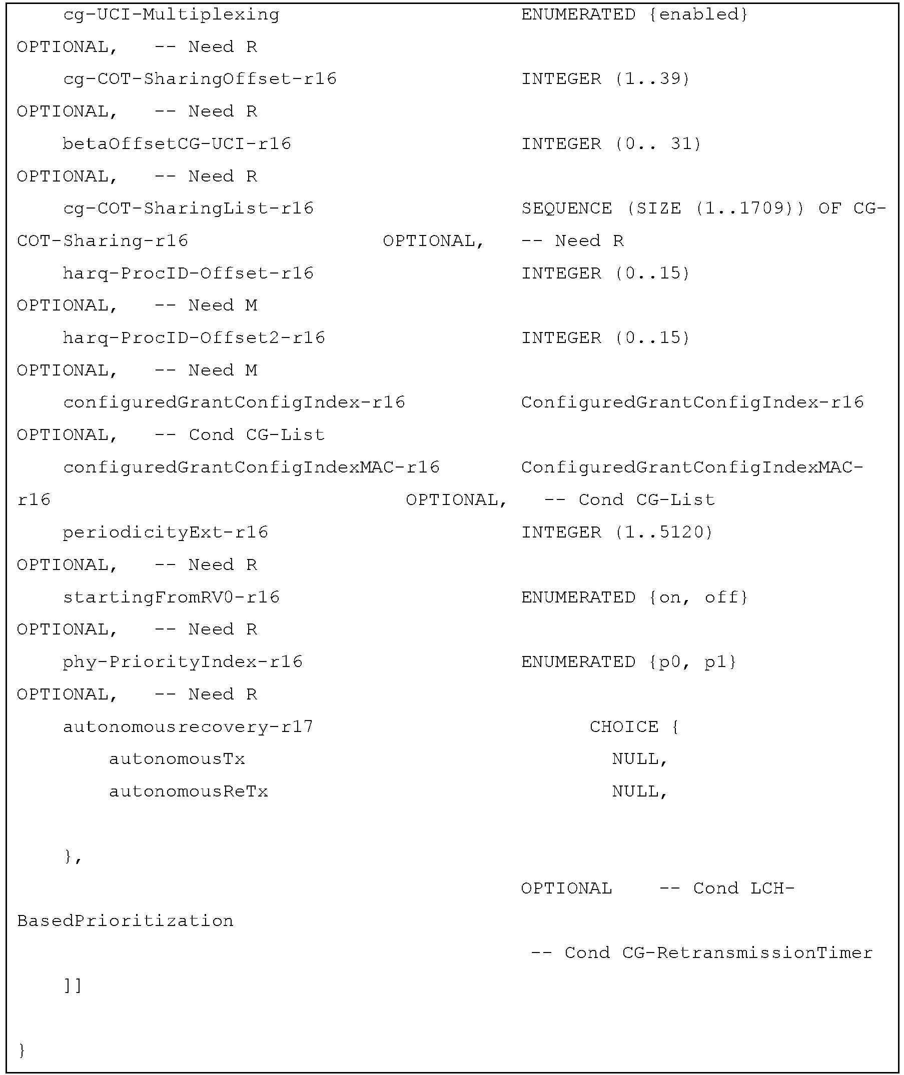

In various embodiments, a UE performs only autonomous retransmissions (e.g., NR-U) (e.g., HARQ process is pending) for any further UL transmissions on this configured grant configuration if an LBT failure occurs for a corresponding uplink transmission and no preemption and/or deprioritization by a higher priority UL grant and/or transmission has happened before for this configured grant configuration. In certain embodiments, a UE may - once LBT failure has occurred - refrain from applying autonomous transmissions for this configured grant configuration. Essentially even if a configured grant of this configured grant configuration is deprioritized and/or preempted by a higher priority UL grant and/or transmission, the UE may consider the UL grant as prioritized and further consider the associated HARQ process as pending (e.g., triggering an autonomous retransmission).

In certain embodiments, a UE performs only autonomous transmissions (e.g., IIoT) (e.g., UL grant is considered as deprioritized) for any further UL transmissions on this configured grant configuration if a preemption and/or deprioritization by a higher priority UL grant and/or transmission occurs for a CG of this configured grant configuration and no LBT failure has happened before for this configured grant configuration. In such embodiments, the UE may - once deprioritization and/or preemption took place - refrain from applying autonomous retransmissions for this configured grant configuration. Therefore, even if a LBT failures occurs, the UE may consider the corresponding UL grant (e.g., CG) as deprioritized and further consider the associated HARQ process as not pending (e.g., triggering an autonomous transmission).

In some embodiments, if HARQ processes are shared among different configured grants on the same BWP, a CG-RetransmissionTimer may be set to the same value for all CG configurations on the BWP. In such embodiments, the CG-RetransmissionTimer may be set to the same value for all CG configurations sharing the HARQ processes on the BWP.

In various embodiments, a UE selects the smallest CG-retransmission value among the CG configurations sharing the HARQ processes if a CG-RetransmissionTimer is not set to the same value for all of CG configurations on a BWP.

In certain embodiments, a network configures, for a configured grant configuration, whether a UE implementation selects a HARQ process identifier ("ID") among the HARQ process IDs available for a configured grant configuration or whether the HARQ process is determined according to some formula (e.g., HARQ process ID associated with the first symbol of a UL transmission is derived from the following equation): HARQ Process ID = [floor(CURRENT_symbol / periodicity)] modulo nrofHARQ-Processes + harq-ProcID-Offset2.

In some embodiments, a UE indicates a HARQ process ID and new data indicator ("NDI"), e.g., within the CG-UCI, even if the HARQ process ID is derived based on some formula.

In various embodiments, a UE may postpone the transmission of a pending HARQ process or a retransmission and prioritize the transmission of a new initial transmission if a priority of data included in a new TB is higher than the priority of the TB for the pending HARQ process and/or retransmission. In certain embodiments, a UE may always prioritize retransmissions over new transmissions (e.g., UE selects a pending HARQ process before transmitting a new (e.g., initial) transmission). However, in some embodiments, if a UE has higher priority data in its buffer, such as URLLC traffic, the UE may transmit high priority data and postpone the transmission of a lower priority TB for a pending HARQ process. Therefore, in various embodiments, a UE compares the priority of a TB for a pending HARQ process with the priority of data pending in the UE for new transmission before selecting a HARQ process for transmission. If a CG uplink resource may be either used for an autonomous retransmission (e.g., pending HARQ process), or for a new transmission, the UE may prioritize higher priority data and select a HARQ process accordingly. The priority of an uplink transmission may be determined by the highest priority among priorities of logical channels with data available that are multiplexed (e.g., for retransmission) or may be multiplexed in the MAC PDU (e.g., for new transmission), according to mapping restrictions. A retransmission (e.g., autonomous retransmission due to LBT failure or a retransmission triggered by the expiry of the CG-RetransmissionTimer) may be pre-empted and/or deprioritized by higher priority data that is available for transmission in the UE, the UE postpones the retransmission to a subsequent CG resource. In certain embodiments, a UE restarts a CG-RetransmissionTimer if a retransmission could not be performed due to higher priority data that is available for transmission. In some embodiments, a HARQ process may be considered as pending if a (autonomous) retransmission could not be performed due to higher priority data that is available for a new transmission (e.g., retransmission is pre-empted by a higher priority new transmission).

In various embodiments, a network entity, such as a gNB, configures a UE/MAC about whether the UE will always prioritize retransmissions over new transmission when performing HARQ process selection or whether the UE will prioritize retransmission versus new transmission based on priority of data (e.g., UE postpones the transmission of a pending HARQ process and prioritizes the transmission of a new initial transmission if the priority of the data included in the new TB is higher than the priority of the TB for the pending HARQ process).

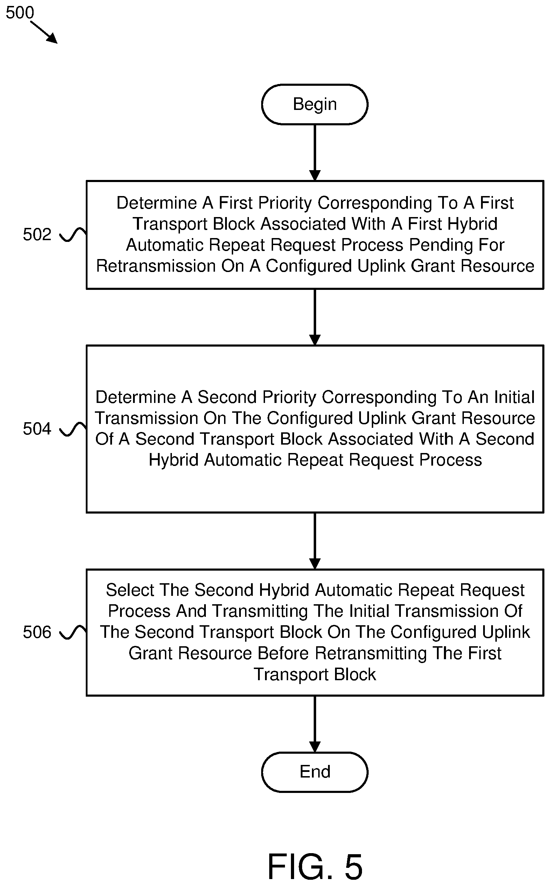

Figure 5 is a flow chart diagram illustrating one embodiment of a method 500 for transmitting a prioritized transport block. In some embodiments, the method 500 is performed by an apparatus, such as the remote unit 102. In certain embodiments, the method 500 may be performed by a processor executing program code, for example, a microcontroller, a microprocessor, a CPU, a GPU, an auxiliary processing unit, a FPGA, or the like.

In various embodiments, the method 500 includes determining 502, at a user equipment, a first priority corresponding to a first transport block associated with a first hybrid automatic repeat request process pending for retransmission on a configured uplink grant resource. In some embodiments, the method 500 includes determining 504 a second priority corresponding to an initial transmission on the configured uplink grant resource of a second transport block associated with a second hybrid automatic repeat request process. In certain embodiments, the method 500 includes selecting 506 the second hybrid automatic repeat request process and transmitting the initial transmission of the second transport block on the configured uplink grant resource before retransmitting the first transport block.

In certain embodiments, selecting the second hybrid automatic repeat request process and transmitting the initial transmission of the second transport block on the configured uplink grant resource before retransmitting the first transport block associated with the first hybrid automatic repeat request process comprises transmitting the initial transmission of the second transport block before retransmitting the first transport block in response to the second priority being higher than the first priority. In some embodiments, the method 500 further comprises receiving configuration information indicating to transmit a higher priority new transmission before transmitting a lower priority retransmission. In various embodiments, the method 500 further comprises, in response to the first hybrid automatic repeat request process and the second hybrid automatic repeat request process configured to use the configured grant resource, receiving configuration information indicating to select the first hybrid automatic repeat request process and transmit the retransmission of the first transport block regardless of the first priority and the second priority.

In one embodiment, the method 500 further comprises restarting a timer associated with the configured grant uplink resource in response to transmitting the initial transmission of the second transport block before retransmitting the first transport block. In certain embodiments, after transmitting the initial transmission of the second transport block, the first hybrid automatic repeat request process associated with the data corresponding to the first transport block is considered as pending. In some embodiments, after transmitting the initial transmission of the second transport block, the method comprises retransmitting the first transport block associated with the first hybrid automatic repeat request process on next available configured uplink grant resources associated with the first hybrid automatic repeat request process.

In various embodiments, transmitting the initial transmission of the second transport block before retransmitting the first transport block comprises transmitting the initial transmission of the second transport block in a configured grant uplink resource. In one embodiment, the first priority and the second priority correspond to logical channel priorities. In certain embodiments, second data corresponding to the second transport block is received after first data corresponding to the first transport block.

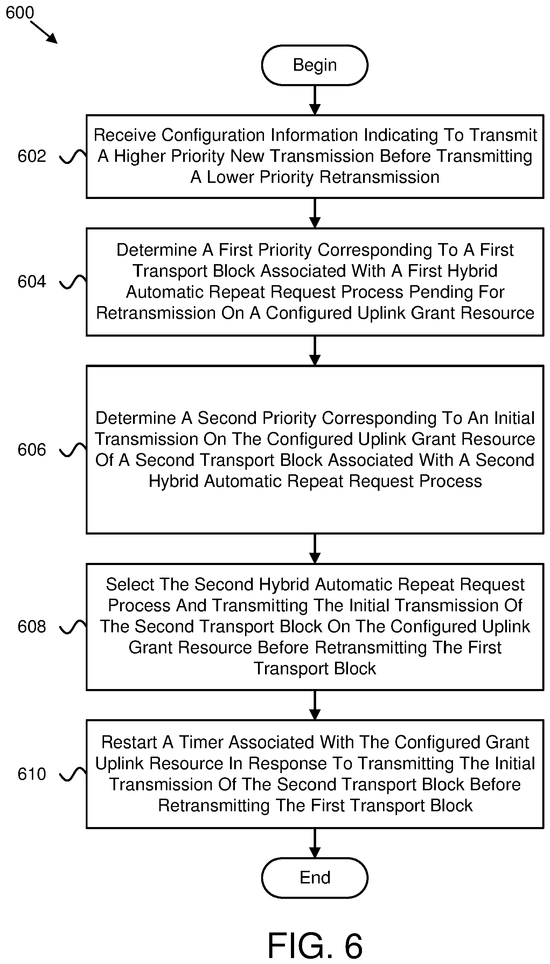

Figure 6 is a flow chart diagram illustrating one embodiment of a method 600 for transmitting a prioritized transport block. In some embodiments, the method 600 is performed by an apparatus, such as the remote unit 102. In certain embodiments, the method 600 may be performed by a processor executing program code, for example, a microcontroller, a microprocessor, a CPU, a GPU, an auxiliary processing unit, a FPGA, or the like.

In various embodiments, the method 600 includes receiving 602 configuration information indicating to transmit a higher priority new transmission before transmitting a lower priority retransmission. In certain embodiments, the method 600 includes determining 604, at a user equipment, a first priority corresponding to a first transport block associated with a first hybrid automatic repeat request process pending for retransmission on a configured uplink grant resource. In some embodiments, the method 600 includes determining 606 a second priority corresponding to an initial transmission on the configured uplink grant resource of a second transport block associated with a second hybrid automatic repeat request process. In certain embodiments, the method 600 includes selecting 608 the second hybrid automatic repeat request process and transmitting the initial transmission of the second transport block on the configured uplink grant resource before retransmitting the first transport block. In some embodiments, the method 600 includes restarting 610 a timer associated with the configured grant uplink resource in response to transmitting the initial transmission of the second transport block before retransmitting the first transport block.

In one embodiment, a method of a user equipment comprises: determining a first priority corresponding to a first transport block associated with a first hybrid automatic repeat request process pending for retransmission on a configured uplink grant resource; determining a second priority corresponding to an initial transmission on the configured uplink grant resource of a second transport block associated with a second hybrid automatic repeat request process; and selecting the second hybrid automatic repeat request process and transmitting the initial transmission of the second transport block on the configured uplink grant resource before retransmitting the first transport block.

In certain embodiments, selecting the second hybrid automatic repeat request process and transmitting the initial transmission of the second transport block on the configured uplink grant resource before retransmitting the first transport block associated with the first hybrid automatic repeat request process comprises transmitting the initial transmission of the second transport block before retransmitting the first transport block in response to the second priority being higher than the first priority.

In some embodiments, the method further comprises receiving configuration information indicating to transmit a higher priority new transmission before transmitting a lower priority retransmission.

In various embodiments, the method further comprises, in response to the first hybrid automatic repeat request process and the second hybrid automatic repeat request process configured to use the configured grant resource, receiving configuration information indicating to select the first hybrid automatic repeat request process and transmit the retransmission of the first transport block regardless of the first priority and the second priority.

In one embodiment, the method further comprises restarting a timer associated with the configured grant uplink resource in response to transmitting the initial transmission of the second transport block before retransmitting the first transport block.

In certain embodiments, after transmitting the initial transmission of the second transport block, the first hybrid automatic repeat request process associated with the data corresponding to the first transport block is considered as pending.

In some embodiments, after transmitting the initial transmission of the second transport block, the method comprises retransmitting the first transport block associated with the first hybrid automatic repeat request process on next available configured uplink grant resources associated with the first hybrid automatic repeat request process.

In various embodiments, transmitting the initial transmission of the second transport block before retransmitting the first transport block comprises transmitting the initial transmission of the second transport block in a configured grant uplink resource.

In one embodiment, the first priority and the second priority correspond to logical channel priorities.

In certain embodiments, second data corresponding to the second transport block is received after first data corresponding to the first transport block.

In one embodiment, an apparatus comprises a user equipment. The apparatus further comprises: a transmitter; and a processor that: determines a first priority corresponding to a first transport block associated with a first hybrid automatic repeat request process pending for retransmission on a configured uplink grant resource; determines a second priority corresponding to an initial transmission on the configured uplink grant resource of a second transport block associated with a second hybrid automatic repeat request process; and selects the second hybrid automatic repeat request process, wherein the transmitter transmits the initial transmission of the second transport block on the configured uplink grant resource before retransmitting the first transport block.

In certain embodiments, the processor selecting the second hybrid automatic repeat request process and the transmitter transmitting the initial transmission of the second transport block on the configured uplink grant resource before retransmitting the first transport block associated with the first hybrid automatic repeat request process comprises the transmitter transmitting the initial transmission of the second transport block before retransmitting the first transport block in response to the second priority being higher than the first priority.

In some embodiments, the apparatus further comprises a receiver that receives configuration information indicating to transmit a higher priority new transmission before transmitting a lower priority retransmission.

In various embodiments, the apparatus further comprises a receiver that, in response to the first hybrid automatic repeat request process and the second hybrid automatic repeat request process configured to use the configured grant resource, receives configuration information indicating to select the first hybrid automatic repeat request process, wherein the transmitter transmits the retransmission of the first transport block regardless of the first priority and the second priority.

In one embodiment, the processor restarts a timer associated with the configured grant uplink resource in response to the transmitter transmitting the initial transmission of the second transport block before retransmitting the first transport block.

In certain embodiments, after transmitting the initial transmission of the second transport block, the first hybrid automatic repeat request process associated with the data corresponding to the first transport block is considered as pending.

In some embodiments, after transmitting the initial transmission of the second transport block, the transmitter retransmits the first transport block associated with the first hybrid automatic repeat request process on next available configured uplink grant resources associated with the first hybrid automatic repeat request process.

In various embodiments, the transmitter transmitting the initial transmission of the second transport block before retransmitting the first transport block comprises the transmitter transmitting the initial transmission of the second transport block in a configured grant uplink resource.

In one embodiment, the first priority and the second priority correspond to logical channel priorities.

In certain embodiments, second data corresponding to the second transport block is received after first data corresponding to the first transport block.

Embodiments may be practiced in other specific forms. The described embodiments are to be considered in all respects only as illustrative and not restrictive. The scope of the invention is indicated by the appended claims.

## Claims

1. A method (500) performed by a user equipment, the method (500) comprising:
determining (502) a first priority corresponding to a first transport block associated with a first hybrid automatic repeat request process pending for retransmission on a configured uplink grant resource;
determining (504) a second priority corresponding to an initial transmission on the configured uplink grant resource of a second transport block associated with a second hybrid automatic repeat request process;
comparing the first priority and the second priority;
selecting (506) the one of the second hybrid automatic repeat request process and the first hybrid automatic repeat request process having the higher priority; and
transmitting the selected one of the second hybrid automatic repeat request process and the first hybrid automatic repeat request process on the configured uplink grant resource before retransmitting the not selected one of the second hybrid automatic repeat request process and the first hybrid automatic repeat request process.

2. The method (500) of claim 1, further comprising selecting (506) the second hybrid automatic repeat request process and transmitting the initial transmission of the second transport block on the configured uplink grant resource before retransmitting the first transport block associated with the first hybrid automatic repeat request process comprises transmitting the initial transmission of the second transport block before retransmitting the first transport block in response to the second priority being higher than the first priority.

3. The method (500) of claim 1, further comprising receiving configuration information indicating to transmit a higher priority new transmission before transmitting a lower priority retransmission.

4. The method (500) of claim 1, further comprising restarting a timer associated with the configured grant uplink resource in response to transmitting the initial transmission of the second transport block before retransmitting the first transport block.

5. The method (500) of claim 1, wherein, after transmitting the initial transmission of the selected one of the second hybrid automatic repeat request process and the first hybrid automatic repeat request process, the not selected one of the second hybrid automatic repeat request process and the first hybrid automatic repeat request process is considered as pending.

6. The method (500) of claim 1, further comprising, after transmitting the selected one of the second hybrid automatic repeat request process and the first hybrid automatic repeat request process, transmitting the not selected one of the second hybrid automatic repeat request process and the first hybrid automatic repeat request process.

7. The method (500) of claim 1, wherein second data corresponding to the second transport block is received after first data corresponding to the first transport block.

8. A user equipment (200) comprising:
a transmitter (210); and
a processor (202) arranged to:
determine a first priority corresponding to a first transport block associated with a first hybrid automatic repeat request process pending for retransmission on a configured uplink grant resource;
determine a second priority corresponding to an initial transmission on the configured uplink grant resource of a second transport block associated with a second hybrid automatic repeat request process;
compare the first priority and the second priority; and
select the one of the second hybrid automatic repeat request process and the first hybrid automatic repeat request process having the higher priority;
wherein the transmitter (210) is arranged to transmit the selected one of the second hybrid automatic repeat request process and the first hybrid automatic repeat request process on the configured uplink grant resource before retransmitting the not selected one of the second hybrid automatic repeat request process and the first hybrid automatic repeat request process.

9. The user equipment (200) of claim 8, wherein the processor (202) is further arranged to select the second hybrid automatic repeat request process and the transmitter transmitting the initial transmission of the second transport block on the configured uplink grant resource before retransmitting the first transport block associated with the first hybrid automatic repeat request process comprises the transmitter transmitting the initial transmission of the second transport block before retransmitting the first transport block in response to the second priority being higher than the first priority.

10. The user equipment (200) of claim 8, further comprising a receiver (212) arranged to receive configuration information indicating to transmit a higher priority new transmission before transmitting a lower priority retransmission.

11. The user equipment (200) of claim 8, wherein, after transmitting the initial transmission of the selected one of the second hybrid automatic repeat request process and the first hybrid automatic repeat request process, the not selected one of the second hybrid automatic repeat request process and the first hybrid automatic repeat request process is considered as pending.

12. The user equipment (200) of claim 8, wherein, after transmitting the selected one of the second hybrid automatic repeat request process and the first hybrid automatic repeat request process, transmitting the not selected one of the second hybrid automatic repeat request process and the first hybrid automatic repeat request process.

13. The user equipment (200) of claim 8, wherein second data corresponding to the second transport block is received after first data corresponding to the first transport block.

14. A processor (202) for wireless communication, comprising: at least one controller coupled with at least one memory and configured to cause the processor to:
determine a first priority corresponding to a first transport block associated with a first hybrid automatic repeat request process pending for retransmission on a configured uplink grant resource;
determine a second priority corresponding to an initial transmission on the configured uplink grant resource of a second transport block associated with a second hybrid automatic repeat request process;
compare the first priority and the second priority;
select the one of the second hybrid automatic repeat request process and the first hybrid automatic repeat request process having the higher priority; and
transmit the selected one of the second hybrid automatic repeat request process and the first hybrid automatic repeat request process on the configured uplink grant resource before retransmitting the not selected one of the second hybrid automatic repeat request process and the first hybrid automatic repeat request process.

## Patentansprüche

1. Verfahren (500), das von einem Teilnehmergerät durchgeführt wird, wobei das Verfahren (500) umfasst:
Bestimmen (502) einer ersten Priorität, die einem ersten Transportblock entspricht, der mit einem ersten Hybrid-Automatic-Repeat-Request-Prozess assoziiert ist, der zur Neuübertragung auf einer konfigurierten Uplink-Grant-Ressource ansteht;
Bestimmen (504) einer zweiten Priorität, die einer anfänglichen Übertragung auf der konfigurierten Uplink-Grant-Ressource eines zweiten Transportblocks entspricht, der mit einem zweiten Hybrid-Automatic-Repeat-Request-Prozess assoziiert ist;
Vergleichen der ersten Priorität und der zweiten Priorität;
Auswählen (506) des einen von dem zweiten Hybrid-Automatic-Repeat-Request-Prozess und dem ersten Hybrid-Automatic-Repeat-Request-Prozess mit der höheren Priorität; und
Übertragen des ausgewählten einen von dem zweiten Hybrid-Automatic-Repeat-Request-Prozess und dem ersten Hybrid-Automatic-Repeat-Request-Prozess auf der konfigurierten Uplink-Grant-Ressource vor einem Neuübertragen des nicht ausgewählten einen von dem zweiten Hybrid-Automatic-Repeat-Request-Prozess und dem ersten Hybrid-Automatic-Repeat-Request-Prozess.

2. Verfahren (500) nach Anspruch 1, ferner umfassend ein Auswählen (506) des zweiten Hybrid-Automatic-Repeat-Request-Prozesses und wobei ein Übertragen der anfänglichen Übertragung des zweiten Transportblocks auf der konfigurierten Uplink-Grant-Ressource vor einem Neuübertragen des ersten Transportblocks, der mit dem ersten Hybrid-Automatic-Repeat-Request-Prozess assoziiert ist, ein Übertragen der anfänglichen Übertragung des zweiten Transportblocks vor einem Neuübertragen des ersten Transportblocks als Reaktion darauf, dass die zweite Priorität höher als die erste Priorität ist, umfasst.

3. Verfahren (500) nach Anspruch 1, ferner umfassend ein Empfangen von Konfigurationsinformationen, die angeben, eine neue Übertragung mit höherer Priorität vor einem Übertragen einer Neuübertragung mit niedrigerer Priorität zu übertragen.

4. Verfahren (500) nach Anspruch 1, ferner umfassend ein Neustarten eines Timers, der mit der konfigurierten Grant-Uplink-Ressource assoziiert ist, als Reaktion auf ein Übertragen der anfänglichen Übertragung des zweiten Transportblocks vor einem Neuübertragen des ersten Transportblocks.

5. Verfahren (500) nach Anspruch 1, wobei nach einem Übertragen der anfänglichen Übertragung des ausgewählten einen von dem zweiten Hybrid-Automatic-Repeat-Request-Prozess und dem ersten Hybrid-Automatic-Repeat-Request-Prozess der nicht ausgewählte eine von dem zweiten Hybrid-Automatic-Repeat-Request-Prozess und dem ersten Hybrid-Automatic-Repeat-Request-Prozess als anstehend erachtet wird.

6. Verfahren (500) nach Anspruch 1, ferner umfassend nach einem Übertragen des ausgewählten einen von dem zweiten Hybrid-Automatic-Repeat-Request-Prozess und dem ersten Hybrid-Automatic-Repeat-Request-Prozess ein Übertragen des nicht ausgewählten einen von dem zweiten Hybrid-Automatic-Repeat-Request-Prozess und dem ersten Hybrid-Automatic-Repeat-Request-Prozess.

7. Verfahren (500) nach Anspruch 1, wobei zweite Daten, die dem zweiten Transportblock entsprechen, nach ersten Daten, die dem ersten Transportblock entsprechen, empfangen werden.

8. Teilnehmergerät (200), umfassend:
einen Sender (210); und
einen Prozessor (202), der eingerichtet ist zum:
Bestimmen einer ersten Priorität, die einem ersten Transportblock entspricht, der mit einem ersten Hybrid-Automatic-Repeat-Request-Prozess assoziiert ist, der zur Neuübertragung auf einer konfigurierten Uplink-Grant-Ressource ansteht;
Bestimmen einer zweiten Priorität, die einer anfänglichen Übertragung auf der konfigurierten Uplink-Grant-Ressource eines zweiten Transportblocks entspricht, der mit einem zweiten Hybrid-Automatic-Repeat-Request-Prozess assoziiert ist;
Vergleichen der ersten Priorität und der zweiten Priorität; und
Auswählen des einen von dem zweiten Hybrid-Automatic-Repeat-Request-Prozess und dem ersten Hybrid-Automatic-Repeat-Request-Prozess mit der höheren Priorität;
wobei der Sender (210) dazu eingerichtet ist, den ausgewählten einen von dem zweiten Hybrid-Automatic-Repeat-Request-Prozess und dem ersten Hybrid-Automatic-Repeat-Request-Prozess auf der konfigurierten Uplink-Grant-Ressource vor einem Neuübertragen des nicht ausgewählten einen von dem zweiten Hybrid-Automatic-Repeat-Request-Prozess und dem ersten Hybrid-Automatic-Repeat-Request-Prozess zu übertragen.

9. Teilnehmergerät (200) nach Anspruch 8, wobei der Prozessor (202) ferner dazu eingerichtet ist, den zweiten Hybrid-Automatic-Repeat-Request-Prozess auszuwählen, und ein Übertragen der anfänglichen Übertragung des zweiten Transportblocks auf der konfigurierten Uplink-Grant-Ressource vor einem Neuübertragen des ersten Transportblocks, der mit dem ersten Hybrid-Automatic-Repeat-Request-Prozess assoziiert ist, durch den Sender umfasst, dass der Sender die anfängliche Übertragung des zweiten Transportblocks vor einem Neuübertragen des ersten Transportblocks als Reaktion darauf, dass die zweite Priorität höher als die erste Priorität ist, überträgt.

10. Teilnehmergerät (200) nach Anspruch 8, ferner umfassend einen Empfänger (212), der dazu eingerichtet ist, Konfigurationsinformationen zu empfangen, die angeben, eine neue Übertragung mit höherer Priorität vor einem Übertragen einer Neuübertragung mit niedrigerer Priorität zu übertragen.

11. Teilnehmergerät (200) nach Anspruch 8, wobei nach einem Übertragen der anfänglichen Übertragung des ausgewählten einen von dem zweiten Hybrid-Automatic-Repeat-Request-Prozess und dem ersten Hybrid-Automatic-Repeat-Request-Prozess der nicht ausgewählte eine von dem zweiten Hybrid-Automatic-Repeat-Request-Prozess und dem ersten Hybrid-Automatic-Repeat-Request-Prozess als anstehend erachtet wird.

12. Teilnehmergerät (200) nach Anspruch 8, wobei nach einem Übertragen des ausgewählten einen von dem zweiten Hybrid-Automatic-Repeat-Request-Prozess und dem ersten Hybrid-Automatic-Repeat-Request-Prozess ein Übertragen des nicht ausgewählten einen von dem zweiten Hybrid-Automatic-Repeat-Request-Prozess und dem ersten Hybrid-Automatic-Repeat-Request-Prozess.

13. Teilnehmergerät (200) nach Anspruch 8, wobei zweite Daten, die dem zweiten Transportblock entsprechen, nach ersten Daten, die dem ersten Transportblock entsprechen, empfangen werden.

14. Prozessor (202) zur drahtlosen Kommunikation, umfassend: mindestens einen Controller, der mit mindestens einem Speicher gekoppelt ist und dazu konfiguriert ist, den Prozessor zu veranlassen zum:
Bestimmen einer ersten Priorität, die einem ersten Transportblock entspricht, der mit einem ersten Hybrid-Automatic-Repeat-Request-Prozess assoziiert ist, der zur Neuübertragung auf einer konfigurierten Uplink-Grant-Ressource ansteht;
Bestimmen einer zweiten Priorität, die einer anfänglichen Übertragung auf der konfigurierten Uplink-Grant-Ressource eines zweiten Transportblocks entspricht, der mit einem zweiten Hybrid-Automatic-Repeat-Request-Prozess assoziiert ist;
Vergleichen der ersten Priorität und der zweiten Priorität;
Auswählen des einen von dem zweiten Hybrid-Automatic-Repeat-Request-Prozess und dem ersten Hybrid-Automatic-Repeat-Request-Prozess mit der höheren Priorität; und
Übertragen des ausgewählten einen von dem zweiten Hybrid-Automatic-Repeat-Request-Prozess und dem ersten Hybrid-Automatic-Repeat-Request-Prozess auf der konfigurierten Uplink-Grant-Ressource vor einem Neuübertragen des nicht ausgewählten einen von dem zweiten Hybrid-Automatic-Repeat-Request-Prozess und dem ersten Hybrid-Automatic-Repeat-Request-Prozess.

## Revendications

1. Procédé (500) mis en œuvre par un équipement utilisateur, le procédé (500) comprenant :
la détermination (502) d'une première priorité correspondant à un premier bloc de transport associé à un premier processus de demande de répétition automatique hybride en attente de retransmission sur une ressource d'allocation de liaison montante configurée ;
la détermination (504) d'une seconde priorité correspondant à une transmission initiale, sur la ressource d'allocation de liaison montante configurée, d'un second bloc de transport associé à un second processus de demande de répétition automatique hybride ;
la comparaison de la première priorité et de la seconde priorité ;
la sélection (506) du processus, parmi le second processus de demande de répétition automatique hybride et le premier processus de demande de répétition automatique hybride, présentant la priorité la plus élevée ; et
la transmission du processus sélectionné parmi le second processus de demande de répétition automatique hybride et le premier processus de demande de répétition automatique hybride sur la ressource d'allocation de liaison montante configurée, avant de retransmettre le processus non sélectionné parmi le second processus de demande de répétition automatique hybride et le premier processus de demande de répétition automatique hybride.

2. Procédé (500) de la revendication 1, comprenant en outre le fait que la sélection (506) du second processus de demande de répétition automatique hybride et la transmission de la transmission initiale du second bloc de transport sur la ressource d'allocation de liaison montante configurée, avant la retransmission du premier bloc de transport associé au premier processus de demande de répétition automatique hybride, comprend la transmission de la transmission initiale du second bloc de transport avant la retransmission du premier bloc de transport en réponse au fait que la seconde priorité est supérieure à la première priorité.

3. Procédé (500) de la revendication 1, comprenant en outre la réception d'informations de configuration indiquant de transmettre une nouvelle transmission de priorité supérieure avant de transmettre une retransmission de priorité inférieure.

4. Procédé (500) de la revendication 1, comprenant en outre la remise à zéro d'un temporisateur associé à la ressource d'allocation de liaison montante configurée en réponse à la transmission de la transmission initiale du second bloc de transport avant la retransmission du premier bloc de transport.

5. Procédé (500) de la revendication 1, dans lequel, après la transmission de la transmission initiale du processus sélectionné parmi le second processus de demande de répétition automatique hybride et le premier processus de demande de répétition automatique hybride, le processus non sélectionné parmi le second processus de demande de répétition automatique hybride et le premier processus de demande de répétition automatique hybride est considéré comme en attente.

6. Procédé (500) de la revendication 1, comprenant en outre, après la transmission du processus sélectionné parmi le second processus de demande de répétition automatique hybride et le premier processus de demande de répétition automatique hybride, la transmission du processus non sélectionné parmi le second processus de demande de répétition automatique hybride et le premier processus de demande de répétition automatique hybride.

7. Procédé (500) de la revendication 1, dans lequel des secondes données correspondant au second bloc de transport sont reçues après des premières données correspondant au premier bloc de transport.

8. Équipement utilisateur (200), comprenant :
un émetteur (210) ; et
un processeur (202) agencé pour :
déterminer une première priorité correspondant à un premier bloc de transport associé à un premier processus de demande de répétition automatique hybride en attente de retransmission sur une ressource d'allocation de liaison montante configurée ;
déterminer une seconde priorité correspondant à une transmission initiale, sur la ressource d'allocation de liaison montante configurée, d'un second bloc de transport associé à un second processus de demande de répétition automatique hybride ;
comparer la première priorité et la seconde priorité ; et
sélectionner le processus, parmi le second processus de demande de répétition automatique hybride et le premier processus de demande de répétition automatique hybride, présentant la priorité la plus élevée ;
dans lequel l'émetteur (210) est agencé pour transmettre le processus sélectionné parmi le second processus de demande de répétition automatique hybride et le premier processus de demande de répétition automatique hybride sur la ressource d'allocation de liaison montante configurée, avant de retransmettre le processus non sélectionné parmi le second processus de demande de répétition automatique hybride et le premier processus de demande de répétition automatique hybride.

9. Équipement utilisateur (200) de la revendication 8, dans lequel le processeur (202) est en outre agencé pour sélectionner le second processus de demande de répétition automatique hybride, et dans lequel la transmission, par l'émetteur, de la transmission initiale du second bloc de transport sur la ressource d'allocation de liaison montante configurée, avant la retransmission du premier bloc de transport associé au premier processus de demande de répétition automatique hybride, comprend la transmission, par l'émetteur, de la transmission initiale du second bloc de transport, avant la retransmission du premier bloc de transport, en réponse au fait que la seconde priorité est supérieure à la première priorité.

10. Équipement utilisateur (200) de la revendication 8, comprenant en outre un récepteur (212) agencé pour recevoir des informations de configuration indiquant de transmettre une nouvelle transmission de priorité supérieure avant de transmettre une retransmission de priorité inférieure.

11. Équipement utilisateur (200) de la revendication 8, dans lequel, après la transmission de la transmission initiale du processus sélectionné parmi le second processus de demande de répétition automatique hybride et le premier processus de demande de répétition automatique hybride, le processus non sélectionné parmi le second processus de demande de répétition automatique hybride et le premier processus de demande de répétition automatique hybride est considéré comme en attente.

12. Équipement utilisateur (200) de la revendication 8, dans lequel, après la transmission du processus sélectionné parmi le second processus de demande de répétition automatique hybride et le premier processus de demande de répétition automatique hybride, a lieu la transmission du processus non sélectionné parmi le second processus de demande de répétition automatique hybride et le premier processus de demande de répétition automatique hybride.

13. Équipement utilisateur (200) de la revendication 8, dans lequel des secondes données correspondant au second bloc de transport sont reçues après des premières données correspondant au premier bloc de transport.

14. Processeur (202) pour une communication sans fil, comprenant : au moins un contrôleur couplé à au moins une mémoire et configuré pour amener le processeur à :
déterminer une première priorité correspondant à un premier bloc de transport associé à un premier processus de demande de répétition automatique hybride en attente de retransmission sur une ressource d'allocation de liaison montante configurée ;
déterminer une seconde priorité correspondant à une transmission initiale, sur la ressource d'allocation de liaison montante configurée, d'un second bloc de transport associé à un second processus de demande de répétition automatique hybride ;
comparer la première priorité et la seconde priorité ; et
sélectionner le processus, parmi le second processus de demande de répétition automatique hybride et le premier processus de demande de répétition automatique hybride, présentant la priorité la plus élevée ;
transmettre le processus sélectionné parmi le second processus de demande de répétition automatique hybride et le premier processus de demande de répétition automatique hybride sur la ressource d'allocation de liaison montante configurée, avant de retransmettre le processus non sélectionné parmi le second processus de demande de répétition automatique hybride et le premier processus de demande de répétition automatique hybride.
